# EUROPÄISCHE PATENTSCHRIFT

(11) **EP 2 630 429 B1**
(45) Veröffentlichungstag und Bekanntmachung des Hinweises auf die Patenterteilung: **05.11.2014**
(21) Anmeldenummer: 11802844.8
(22) Anmeldetag: 02.09.2011
(51) Int. Cl.: F27B 3/24, F27D 9/00, C21C 5/52, F16L 27/08, C21B 7/10, C21C 5/40

(54) **KÜHLWASSERFÜHRUNG FÜR EINEN KIPPBAREN SCHMELZOFEN MIT EINEM ANHEB- UND SCHWENKBAREN OFENDECKEL**
COOLING-WATER GUIDE FOR A MELTING FURNACE THAT CAN BE TIPPED AND THAT HAS A FURNACE COVER THAT CAN BE RAISED AND PIVOTED
DISPOSITIF DE GUIDAGE D'EAU DE REFROIDISSEMENT CONÇU POUR UN FOUR DE FUSION POUVANT BASCULER POURVU D'UN COUVERCLE DE FOUR POUVANT ÊTRE SOULEVÉ ET POUVANT PIVOTER

(30) Priorität: 18.10.2010 DE 102010049046
(43) Veröffentlichungstag der Anmeldung: 28.08.2013
(73) Patentinhaber: SMS Siemag AG, 40237 Düsseldorf (DE)
(72) Erfinder: KALUZA, Thomas, D-46539 Dinslaken (DE); STARKE, Peter, 47228 Duisburg (DE)
(74) Vertreter: Klüppel, Walter
(86) Internationale Anmeldenummer: PCT/DE2011/001722
(87) Internationale Veröffentlichungsnummer: WO 2012/051977

(56) Entgegenhaltungen:
- BREDEHOEFT R ET AL: "UMBAU EINES 80-T-LICHTBOGENOFENS DER THYSSEN EDELSTAHLWERKE AG - KUEHLKREISLAEUFE UNTER BESONDERER BERUECKSICHTIGUNG DER VERDAMPFUNGSKUEHLUNG FUER WAND- UND DECKELEMENTE", STAHL UND EISEN, VERLAG STAHLEISEN, DUSSELDORF, DE, Bd. 106, Nr. 19, 1. September 1986 (1986-09-01), Seiten 71-75, XP001202375, ISSN: 0340-4803

## Beschreibung

Die vorliegende Erfindung betrifft eine Kühlwasserführung für einen Schmelzofen zum Schmelzen von Metallen, insbesondere von Stahl, bestehend aus Kühlwasservorläufen und Kühlwasserrückläufen, mit einem mittels einer Kippbühne kippbaren Ofengefäß, das mit einem anheb- und verschwenkbaren Ofendeckel abdeckbar ist.

Derartige Schmelzöfen müssen je nach der Schmelztemperatur des jeweils zu verarbeitenden Metalls mehr oder weniger gekühlt werden. Gleichzeitig müssen sie zum Abstich des Metalls in eine Richtung und zum Abstich der sich auf der Schmelze befindlichen Schlacke in die andere, entgegensetzte Richtung gekippt werden können. Außerdem muss der Ofendeckel, der üblicherweise mit einem Abgaskrümmer versehen ist, soweit abgehoben und geschwenkt werden können, damit der Ofen beschickt werden kann. Um sowohl den Deckel als auch den Ofen bewegen zu können, erfolgt die Kühlwasserversorgung üblicherweise über hitzebeständig ummantelte, flexible Schläuche. Je nach Ofengröße ist die benötigte notwendige Kühlwassermenge unterschiedlich groß.

So beschreibt die EP 0 086 929 A1 beispielsweise die Versorgung eines gattungsgemäßen Schmelzofens mit Kühlwasser über Schläuche.

Aus der DE 695 21 478 T2 ist ein elektrischer Lichtbogenofen beschrieben, dessen Deckel und Ofengefäß mittels Schlauchanschlüssen und diesen zugeordneten Schläuchen mit Kühlwasser versorgt werden.

Wird aber eine große Kühlwassermenge benötigt, so kann man entweder die Nenndurchmesser der Schläuche vergrößern oder die Anzahl der Schläuche erhöhen. Bei größeren Nenndurchmessern der Kühlwasserschläuche besteht dann die Gefahr, dass sie aufgrund ihres Eigengewichtes und ihrer Wasserfüllung bei den auftretenden notwendigen Bewegungen des Ofens an den Verbindungsstellen abreißen.

Beim Abreißen eines Schlauches besteht wiederum die Gefahr, dass wesentliche Teile des Ofens ungekühlt bleiben und durch die hohen Prozesstemperaturen so geschädigt werden können, dass sie ausgetauscht werden müssen, was wiederum Produktionsstillstand und damit verbundene, relativ hohe Kosten verursacht. Die Erhöhung der Kühlwasserschläuche wiederum ist begrenzt durch die beengten Platzverhältnisse unterhalb der Kippbühne und oftmals nicht realisierbar.

Aus der Veröffentlichung von Bredehöft et al.:"Umbau eines 80-t- Lichtbogenofens der Thyssen Edelstahlwerke AG - Kühlkreisläufe unter besonderer Berücksichtigung der Verdampfungskühlung für Wand- und Deckelelemente" in Stahl und Eisen, Verlag Stahleisen, Düsseldorf, Bd 106, Nr. 19, 1. September 1986, Seite 71-75, wird eine Kühlwasserführung für einen Schmelzofen zum Schmelzen von Metallen, insbesondere von Stahl offenbart. Diese umfasst Kühlwasservorläufe und Kühlwasserrückläufe, und ein mittels einer Kippbühne kippbaren Ofengefäß, das mit einem anheb- und verschwenkbaren Ofendeckel abdeckbar ist. Die kühlwasserzu- und abführung erfolgt über abgedichtete Rohrdrehgelenke mittels Kühlwasservorlaufrohrabschnitte und Kühlwasserrücklaufrohrabschnitte, die an einem Ende der Rohrdrehgelenke miteinander verbunden und an ihrem anderen Ende jeweils in Rohrdrehgelenken in Festpunkten drehbar sind, und die einer Kippbewegung der Kippbühne und einer Schwenkbewegung des Ofendeckels, sowie dessen Hub folgend zwischen den Festpunkten scherenförmig relativ zueinander klappbar sind.

Es ist daher Aufgabe der vorliegenden Erfindung, eine Kühlwasserversorgung für Schmelzöfen zu schaffen, die gefahrlos an die benötigte Kühlwassermenge und die vorhandenen Platzverhältnisse angepasst werden kann.

Gelöst wird diese Aufgabe durch die kennzeichnenden Merkmale des Anspruches 1, insbesondere dadurch, dass der Kühlwasservorlauf und die Kühlwasserrückläufe für den Ofendeckel und die Kühlwasserrückläufe für den Abgaskrümmer in einem Drehportal geführt sind.

Durch diese Maßnahmen wird erfindungsgemäß sichergestellt, dass auch eine sehr große Menge an Kühlflüssigkeit, nämlich Kühlwasser, dem Schmelzofen zur Verfügung gestellt werden kann. Rohrleitungen sind wesentlich stabiler als die bisher üblicherweise verwendeten Schlauchverbindungen, die dazu tendieren, bei großen Drücken und Kühlwasserdurchsatzmengen abzureißen. Ferner wird hierdurch ein Verdrillen der Kühlwasservor- und Kühlwasserrückläufe bei betriebsbedingten Kipp- und/oder Schwenkbewegungen des Ofengefäßes und des Ofendeckels wirkungsvoll vermieden.

In einer bevorzugten Ausführungsform der erfindungsgemäßen Kühlwasserführung ist mindestens ein zentraler Kühlwasservorlauf für die Versorgung des Ofendeckels und einen diesem zugeordneten Abgaskrümmer mit Kühlwasser über das Drehportal vorgesehen. Der zentrale Kühlwasservorlauf ist in dem Drehportal um seine im Wesentlichen vertikal verlaufende Längsachse drehbar gelagert. Der zentrale Kühlwasservorlauf versorgt den Ofendeckel und den Abgaskrümmer mit Kühlwasser. Das Drehportal erlaubt dadurch eine Schwenkbewegung des Ofendeckels, wobei sich die jeweiligen Kühlwasservorläufe und die Kühlwasserrückläufe scherenförmig relativ zueinander bewegen können.

In einer weiteren bevorzugten Ausführungsform der erfindungsgemäßen Kühlwasserführung ist das Drehportal so ausgebildet, dass es eine Schwenkbewegung des Ofendeckels samt Abgaskrümmer erlaubt.

Gemäß einer besonders bevorzugten Ausführungsform der erfindungsgemäßen Kühlwasserführung verlaufen der Kühlwasservorlauf und die Kühlwasserrückläufe des Ofendeckels in dem Drehportal im Wesentlichen vertikal, wobei die Kühlwasserrückläufe in einem gemeinsamen Sammler zusammenlaufen und mit diesem über den dem Kühlwasservorlauf zugeordneten Rohrdrehgelenk und einem weiteren Rohrdrehgelenk drehbar ausgebildet sind. Dabei sind die Kühlwasservorläufe und Kühlwasserrückläufe immer parallel zueinander ausgebildet. Es ist somit sichergestellt, dass die Kühlwasservor- und Kühlwasserrückläufe auf vorbestimmten Bewegungsbahnen verdrillungsfrei geführt werden.

Gemäß einer weiteren Ausführungsform der erfindungsgemäßen Kühlwasserführung ist das Drehportal mittels eines Drehportalantriebs vorzugsweise um ca. 90° um den zentralen Kühlwasserzulauf verschwenkbar ist.

In einer bevorzugten Ausführungsform der Kühlwasserführung ist das Drehportal der erfindungsgemäß der Kippbühne zugeordnet, wobei das Drehportal in einem der Kippbühne zugeordneten Drehlager drehbar gelagert.

Gemäß einer besonders bevorzugten Ausführungsform der erfindungsgemäßen Kühlwasserführung sind der Kühlwasservorlauf und die Kühlwasserrückläufe in dem Drehportal im Wesentlichen vertikal geführt und quasi parallel zueinander drehbar.

In einer weiteren Ausführungsform sind die Vorlaufrohrabschnitte und die Rücklaufrohrabschnitte des Ofendeckels und des Abgaskrümmers und des Ofengefäßes in mit Dichtungen versehenen Rohrdrehgelenken miteinander verbunden.

Gemäß einer vorteilhaften Ausführungsform der erfindungsgemäßen Kühlwasserführung sind die Vorlaufrohrabschnitte und die Rücklaufrohrabschnitte des Ofendeckels, des Abgaskrümmers und des Ofengefäßes mittels mit Dichtungen versehenen Rohrdrehgelenken miteinander verbunden.

Gemäß einer vorteilhaften Ausführungsform der erfindungsgemäßen ist es vorgesehen, dass die Kühlwasservorläufe und Kühlwasserrückläufe für das Ofengefäß Festpunkte aufweisen, die in Rohrdrehgelenken scherenförmig mit relativ zueinander klappbaren Vorlaufrohrabschnitten und Rücklaufrohrabschnitten verbunden sind, und die einer mittels der Kippbühne erfolgten Kippbewegung des Ofengefäßes folgen, wobei es vorteilhaft ist, wenn die Vorlaufrohrabschnitte und die Rücklaufrohrabschnitte des Ofengefäßes in Rohrdrehgelenken zwischen den Festpunkten in unterschiedlichen Schwenkwinkeln zueinander klappbar sind.

In einer weiteren, besonders bevorzugten Ausführungsform der erfindungsgemäßen Kühlwasserführung sind die Rohrdrehgelenke drehbare Flanschverbindungen. Die Flanschverbindungen sind außerordentlich sicher gegenüber einem plötzlichen Los- oder Abreißen. Undichtigkeiten zwischen den Flanschverbindungen können leicht durch das Einsetzen von neuen Dichtungen behoben werden. Ferner kann durch das Vorhalten von Ersatzrohrdrehgelenken im Falle einer Undichtigkeit der Betriebszustand der Kühlwasserführung sehr schnell wieder hergestellt werden.

Weitere vorteilhafte Ausführungsformen der Erfindung sind Gegenstand der Unteransprüche. Die Erfindung wird im Folgenden anhand einer beispielhaften Ausführungsform unter Bezugnahme auf die beigefügte Zeichnungen näher erläutert. Es zeigen:
- **Figur 1**: die Darstellung eines Schmelzofens mit einem erfindungsgemäßen Drehportal, mit einer Kühlwasserführung, bei der die Kühlwasservorläufe und die Kühlwasserrückläufe aus über Drehgelenke miteinander verbundenen Rohrabschnitten besteht;
- **Figur 2**: die Draufsicht auf die Sektion C - C in der Figur 1, mit einem zentralen, gemeinsamen Kühlwasservorlauf, um den der Kühlwasserrücklauf des Ofendeckels und der Kühlwasserrücklauf des Abgaskrümmers drehbar angeordnet sind und einen Kühlwasservorlauf und einen getrennten Kühlwasserrücklauf für das Ofengefäß;
- **Figur 3**: die Detaildarstellung des zentralen, beidendig in Rohrdrehgelenken drehbaren und mit Butterflyventilen versehen Kühlwasservorlaufs und den Rohrabschnitten zu dem Kühlwasservorlauf und den Rohrabschnitten des Kühlwasserrücklaufs eines Drehportals gemäß den Figuren 1 und 2;
- **Figur 4**: die Detaildarstellung der Kühlwasserführung über Rohrabschnitten für den Kühlwasservorlauf und den Kühlwasserrücklauf bei geschlossenem Ofendeckel;
- **Figur 5**: die Detaildarstellung der Kühlwasserführung über Rohrabschnitten für den Kühlwasservorlauf und den Kühlwasserrücklauf bei angehobenem und um ca. 90° verschwenktem Ofendeckel;
- **Figur 6**: die Detaildarstellung der Kühlwasserführung über Rohrabschnitten für den Kühlwasservorlauf und den Kühlwasserrücklauf bei geschlossenem Ofendeckel und um 10° gekipptem Ofengefäß;
- **Figur 7**: die Detaildarstellung der Kühlwasserführung über Rohrabschnitten für den Kühlwasservorlauf und den Kühlwasserrücklauf bei geschlossenem Ofendeckel und um 15° entgegengesetzt gekipptem Ofengefäß;
- **Figur 8**: die Detaildarstellung der aus in Rohrdrehgelenken drehbaren Rohrabschnitten des Kühlwasservorlaufs und des Kühlwasserrücklaufs für das Ofengefäß;
- **Figur 9**: die Detaildarstellung der Kühlwasserführung über Rohrabschnitte für den Kühlwasservorlauf und den Kühlwasserrücklauf des Ofengefäßes in Ruhestellung;
- **Figur 10**: die Detaildarstellung der Kühlwasserführung über Rohrabschnitte für den Kühlwasservorlauf und den Kühlwasserrücklauf des Ofengefäßes, um 15° gekippt;
- **Figur 11**: die Detaildarstellung der Kühlwasserführung über Rohrabschnitte für den Kühlwasservorlauf und den Kühlwasserrücklauf des Ofengefäßes, um 10° entgegengesetzt gekippt.

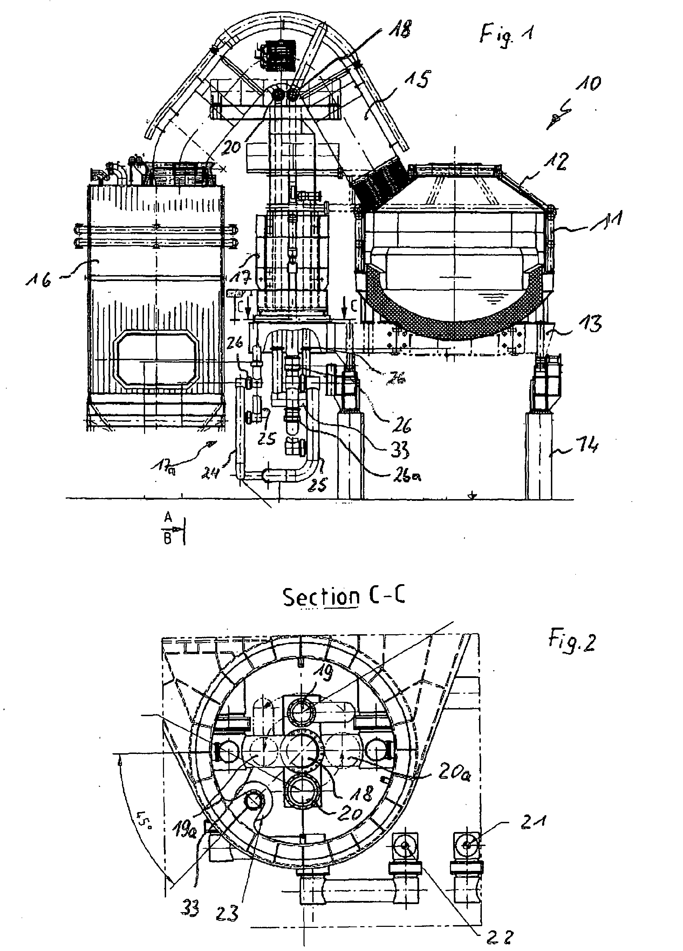

Die Figur 1 zeigt einen Schmelzofen 10 mit einem Ofengefäß 11, dem ein Ofendeckel 12 zugeordnet ist. Der Schmelzofen 10 ist auf einer Kippbühne 13 angeordnet, die wiederum mit einem Ofenfundament 14 verbunden ist. Dem Ofendeckel 12 ist des Weiteren ein Abgaskrümmer 15 zugeordnet, der mit einer Brennkammer 16 verbunden ist.

Der Kippbühne 13 ist ein Drehportal 17 zugeordnet. Das Drehportal 17 ist in der Kippbühne 13 drehbar gelagert und kann mit dieser und dem Schmelzofen 10 zusammen gekippt werden. Das Drehportal 17 weist eine Kühlwasserführung 17a auf, die aus über Drehgelenke 26 miteinander verbundenen Rohrabschnitten 24 und 25 besteht. Der Abgaskrümmer 15 wird über einen dem Drehportal 17 zugeordneten zentralen Kühlwasservorlauf 18 und einen Kühlwasserrücklauf 19, 19a bzw. 20 20a mit Kühlwasser versorgt. Der Kühlwasserrückläufe 19, 19a bzw. 20, 20a laufen in einem gemeinsamen Sammler 33 zusammen. Der Sammler 33 ist in einem weiteren Drehgelenk 26a zusammen mit dem Kühlwasserrückläufen 19, 19a bzw. 20, 20a um den zentralen Kühlwasservorlauf 18 drehbar ausgebildet.

Die Figur 2 zeigt im Detail eine Draufsicht auf die Sektion C-C gemäß der Figur 1. Sie zeigt einen zentralen, gemeinsamen Kühlwasservorlauf 18, um den der Kühlwasserrücklauf 19, 19a des Ofendeckels 12 und der Kühlwasserrücklauf 20, 20a des Abgaskrümmers 15 um ca. 90° verdreht werden kann. Dabei werden die Kühlwasservorläufe 19, 20, die mit dem Sammler 33 gemeinsam verbunden sind, aus dieser ersten Position in eine um 90° gedrehte zweite, mit als Kühlwasservorläufe 19a, 20a, bezeichneten Position, überführt. Ferner zeigt sie einen hiervon getrennt angeordneten Kühlwasservorlauf 21 und einen Kühlwasserrücklauf 22, die dem Ofengefäß 11 zugeordnet sind. Das Ofengefäß 11 wird über den Kühlwasservorlauf 21 und den Kühlwasserrücklauf 22 mit dem betriebsbedingt erforderlichen Kühlwasser versorgt.

Angetrieben wird das Drehportal 17 über ein Drehportalantrieb 23. Durch diese Anordnung ist es möglich, eine verdrillfreie Kühlwasserzuführung sicherzustellen, wenn es im Schmelzprozess notwendig sein sollte, den Ofendeckel 12 anzuheben und zu verschwenken. Zugleich kann das Ofengefäß 11 mit der Kippbühne 13 zum Abstich der Schlacke zum Abstich des Metalls in die entgegengesetzte Richtung gekippt werden.

Die Kühlwasservor- und -rückläufe für den Abgaskrümmer 15 und den Ofendeckel 12 drehen und schwenken dabei mit, ohne sich hierbei ineinander zu verdrehen. Gleichzeitig wird die Kippbewegung des Schmelzofens 10 und damit die Veränderung der aktiven Längen des Kühlwasservor- und Kühlwasserrücklaufes 21 und 22 des Ofengefäßes 11 durch Veränderung der Schwenkwinkel 28 und 29 der Vorlauf- und Rücklaufrohrabschnitte 24 und 25 in den Rohrdrehgelenken 26 ausgeglichen.

Wird der Ofendeckel 12 um den Deckelhub 30 angehoben und verschwenkt, so werden die Kühlwasserrückläufe 19 und 20 und die Kühlwasserrückläufe in die Position 19a, und 20a gedreht. Dadurch kann das Drehportal 17 den Schwenk des Ofendeckels 12 mitmachen und gleichzeitig Kühlung des Ofengefäßes 11 über den zentralen Kühlwasservorlauf 18 und die Kühlwasserrückläufe 19, 19a und 20, 20a aufrecht erhalten. Die Hierfür vorgesehenen Rohleitungen sind an Rohrdrehgelenken 26 drehbar miteinander verbunden. Somit kann das Verdrillen der Vor- und Rückläufe 18 bzw. 19, 19a und 20, 20a bei einem Verschwenken des Ofendeckels 12 ausgeschlossen werden.

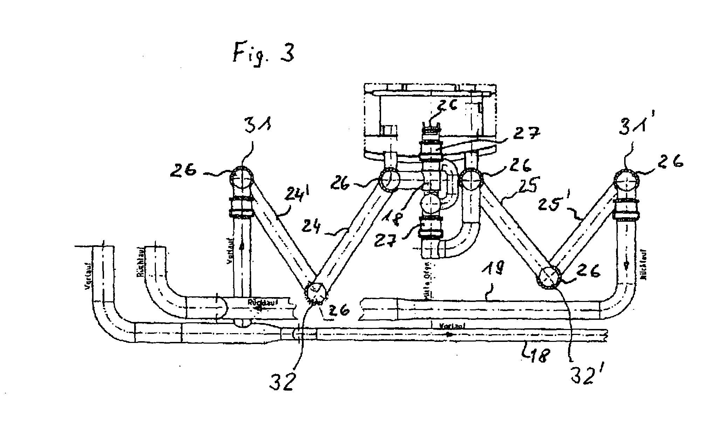

Figur 3 zeigt im Detail den zentralen, beidendig in den Rohrdrehgelenken 26 drehbar gelagerten Kühlwasservorlauf 18, der zum Ofendeckel 12 führt. Der Kühlwasserverlauf 18 kann über zugeordnete sog. Butterflyventile 27 abgesperrt werden. Die Kühlwasserversorgung erfolgt über einen zusätzlich mit Richtungspfeilen (↓,↑) gekennzeichneten Kühlwasservorlauf 18 und Kühlwasserrücklauf 19, die unter anderem auch den Ofendeckel 12 mit der notwendigen Kühlwasser versorgen.

Dem Kühlwasservorlauf 18 sind Vorlaufrohabschnitte 24 und dem Kühlwasserrücklauf 19 sind Rücklaufrohabschnitte 25 zugeordnet. Die Vorlaufrohrabschnitte 24 und die Rücklaufrohrabschnitte 25 sind in den Drehgelenken 26 drehbar und gegeneinander verschiebbar ausgebildet. Die Rohrdrehgelenke 26 sind dabei als drehbare Flanschverbindungen ausgebildet.

Dies kommt dann zum Tragen, wenn das der Schmelzofen 10 zum Abstich mit der Kippbühne 13 in die eine oder andere Richtung gekippt und hierfür der Ofendeckel 12 angehoben wird.

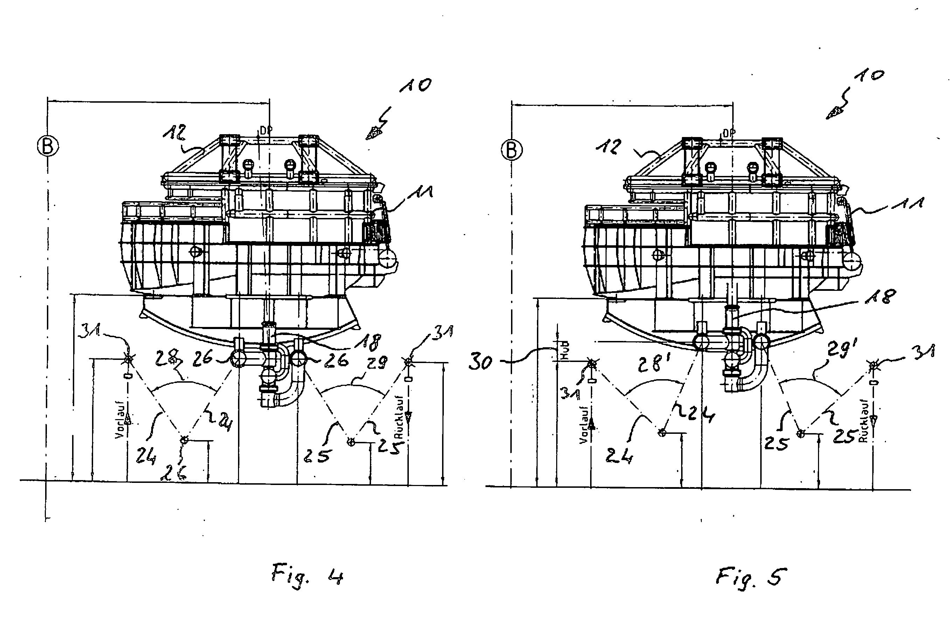

Die Figuren 4 und 5 veranschaulichen den Vorgang, wie sich die Vorlaufrohrabschnitte 24 und Rücklaufrohrabschnitte 25 beim Anheben des Ofendeckels 12 relativ gegeneinander verschoben werden. In Figur 4 weisen die an Festpunkten 31 festgelegten Vorlaufrohrabschnitte 24 und Rücklaufrohrabschnitte 26 einen bestimmten Winkel 28 bzw. 29 auf.

Wie die Figur 5 zeigt, ändert sich der Winkel 28 bzw. 29 durch den Deckelhub 30 des Ofendeckels 12 und die Vorlaufrohrabschnitte 24 und Rücklaufrohrabschnitte 25 bilden nun die Winkel 28' bzw. 29', die größer als der Winkel 28 bzw. 29 sind.

Durch diese Maßnahmen können für die betriebsbedingten Kippbewegungen des Schmelzofens 10 sowie den Hubbewegungen des Ofendeckels 11 erforderlichen Veränderungen der Längen der Kühlwasserversorgung werden damit ausgeglichen. Die jeweils benötigte Kühlwassermenge kann entweder mittels der Absperrventile oder durch entsprechende Dimensionierung der Vorlaufrohrabschnitte 24 und Rücklaufrohrabschnitte 25 variiert werden. Ein Abreißen aufgrund durch Gewicht bedingte Überlastung oder durch eine überdurchschnittliche Beaufschlagung der Rohrabschnitte 24 und 25 mit Kühlwasser ist durch diese Maßnahme ausgeschlossen.

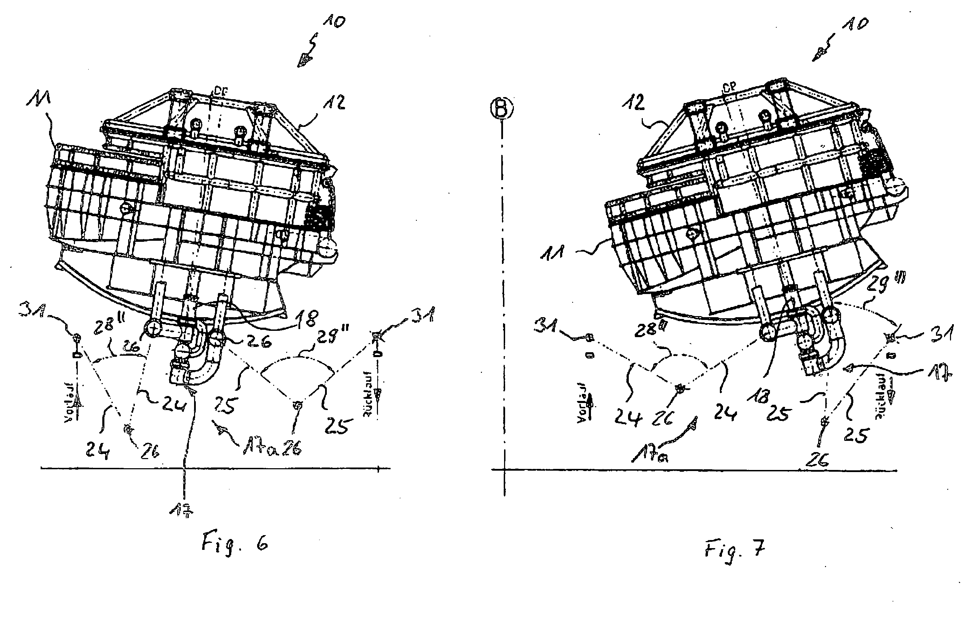

Die Figuren 6 und 7 zeigen die Kühlwasserführung 17a des Schmelzofens 10 über die Vorlaufrohrabschnitte 24 und Rücklaufrohrabschnitte 25 bei geschlossenem Ofendeckel 12 und um 10° gekippten bzw. um 15° entgegengestzt gekipptem Ofengefäß 11. Die den Festpunkten 31 zugeordneten Vorlaufrohrabschnitte 24 und Rücklaufrohrabschnitte 25 sind in Rohrdrehgelenken 26 drehbar gelagert. Die Vorlaufrohrabschnitte 24 und Rücklaufrohrabschnitte 25 sind mit einem Ende an dem Drehportal 17 drehbar angeflanscht.

Wie die Figur 6 weiter zeigt, werden die Vorlaufrohrabschnitte 24 beim Kippen in die eine Richtung aufeinander zu bewegt. Wodurch wird der Winkel 28" zwischen ihnen verkleinert. Gleichzeitig bewegen sich die Rücklaufrohrabschnitte 25 voneinander weg, wodurch sich der Winkel 29" zwischen ihnen vergrößert.

Figur 7 zeigt ein Kippen des Schmelzofens 10 zu dem in Figur 6 dargestellten entgegengesetzt Kippenstellung. Dabei wird der Winkel 28''' zwischen den Vorlaufrohrabschnitten 24 vergrößert, während sich der Winkel 29''' zwischen den Rücklaufrohrabschnitte 25 verkleinert. In beiden Fällen sind die Vorlaufrohrabschnitte 24 und Rücklaufrohrabschnitte 25 in den Festpunkten 31 drehbar, während die Anbindung an das Drehportal 17 lageveränderbar ausgebildet ist. Die Scheitelpunkte 32 zwischen den in Rohrdrehgelenken 26 miteinander verbundenen Vorlaufrohrabschnitten 24 und Rücklaufrohrabschnitten 25 sind dabei höhenvariabel.

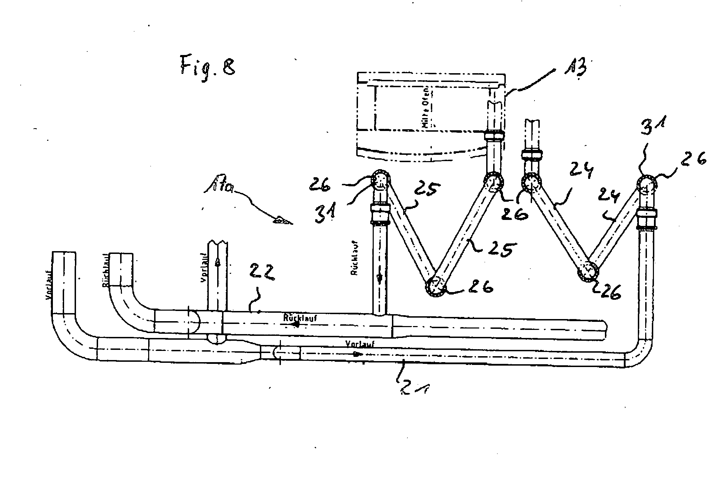

Figur 8 ist eine Darstellung der Kühlwasserführung 17a nur für das hier nicht näher dargestellte Ofengefäß. Auch hierbei sind Vorlaufrohrabschnitte 24 und Rücklaufrohrabschnitte 25 für den Vor- und Rücklauf des Kühlwassers vorgesehen. Die Vorlaufrohrabschnitte 24 und Rücklaufrohrabschnitte 25 sind untereinander mittels Rohrdrehgelenken 26 miteinander verbunden, so dass sie relativ zueinander verschoben werden können. Auch hier sind Festpunkte 31 vorgesehen, an denen die Vorlaufrohrabschnitte 24 und Rücklaufrohrabschnitte 25 drehbar in Position gehalten werden sind. Die Kippbewegung der Kippbühne 13 wird durch die über die Rohrdrehgelenkte 26 relativ zueinander beweglichen, starren Vorlaufrohrabschnitte 24 und Rücklaufrohrabschnitte 25 ausgeglichen.

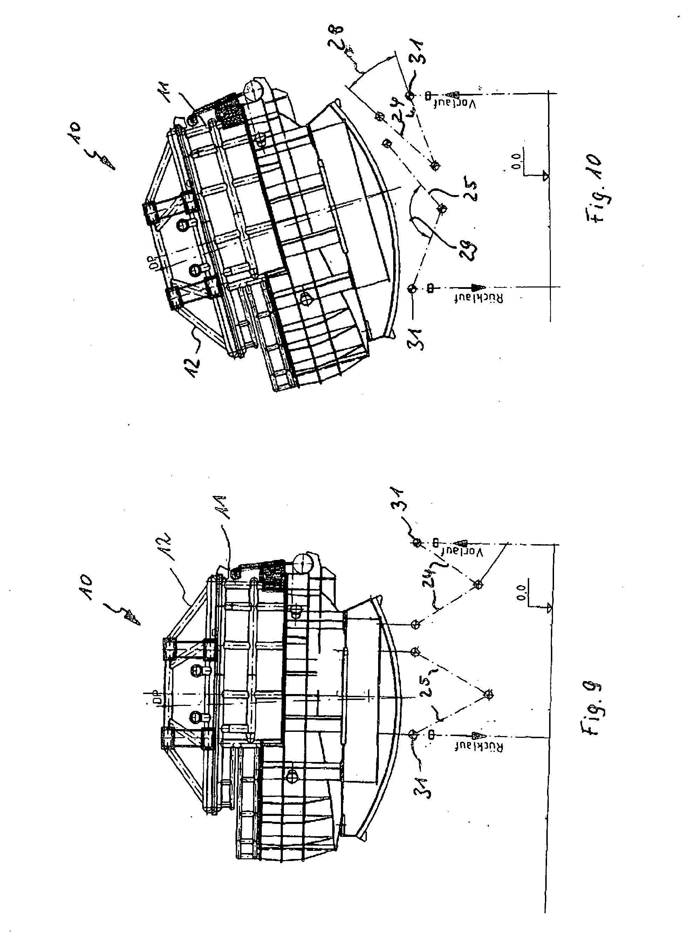

Die Figur 9 zeigt die Kühlwasserführung 17a über die Vorlaufrohrabschnitte 24 und Rücklaufrohrabschnitte 25 für das Ofengefäß 11 in einer Ruhestellung. Ruhestellung bedeutet hier, dass der Schmelzofen 10 weder in die eine noch in die andere Richtung gekippt ist, und der Ofendeckel 12 das Ofengefäß 11 verschließt. Dabei befinden sich die Festpunkte 31 für die Kühlwasserführung 17a des Ofengefäßes 11 im Wesentlichen auf gleicher Höhe.

Wird das Ofengefäß 11, wie in Figur 10 dargestellt ist, um ca. 15° in eine Richtung gekippt, so vergrößert sich der Winkel 29 zwischen den Rücklaufrohrabschnitten 25 und es verkleinert sich der Winkel 28 zwischen den Vorlaufrohrabschnitten 24.

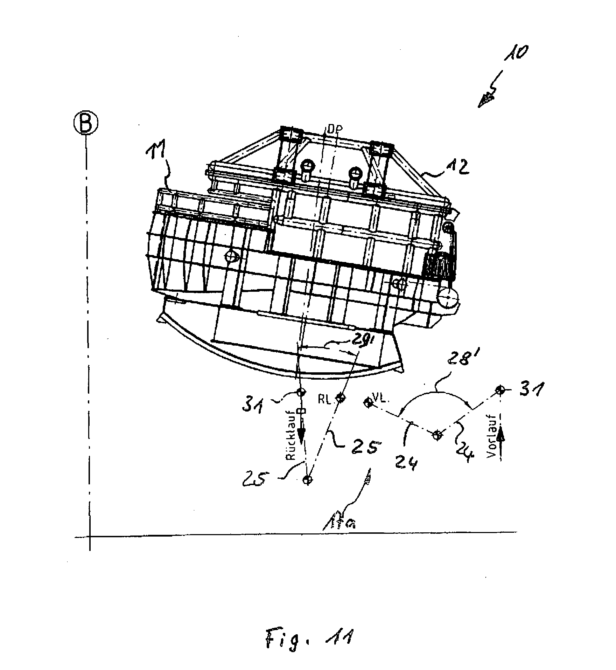

Wird das Ofengefäß 11 nun um 10° in die entgegen gesetzte Richtung gekippt, wie dies in Figur 11 dargestellt ist, verkleinert sich der Winkel 29' zwischen den Rücklaufrohrabschnitten 25, während sich der Winkel 28' zwischen den Vorlaufrohrabschnitten 24 wieder vergrößert. Die Scheitelpunkte 32' zwischen den in Rohrdrehgelenken 26 miteinander verbundenen Vorlaufrohrabschnitten 24 und Rücklaufrohrabschnitten 25 sind dabei ebenfalls höhenvariabel.

### Bezugszeichen

- 10: Schmelzofen
- 11: Ofengefäß
- 12: Ofendeckel
- 13: Kippbühne
- 14: Ofenfundament
- 15: Abgaskrümmer
- 16: Brennkammer
- 17: Drehportal
- 17a: Kühlwasserführung
- 18: Kühlwasservorlauf, Deckel
- 19: Kühlwasserrücklauf, Deckel geschlossen
- 19a: Kühlwasserrücklauf, Deckel verschwenkt
- 20: Krümmerrücklauf, Deckel geschlossen
- 20a: Krümmerrücklauf, Deckel verschwenkt
- 21: Kühlwasservorlauf, Ofen
- 22: Kühlwasserrücklauf, Ofen
- 23: Drehportalantrieb
- 24: Vorlaufrohrabschnitt
- 25: Rücklaufrohrabschnitt
- 26: Rohrdrehgelenk
- 26a: weiteres Rohrdrehgelenk
- 27: Butterflyventil
- 28: Schwenkwinkel, Vorlauf
- 29: Schwenkwinkel, Rücklauf
- 30: Deckelhub
- 31: Festpunkt der Gefäßlcühlung
- 32: Scheitelpunkt
- 33: Sammler

## Patentansprüche

1. Kühlwasserführung für einen Schmelzofen zum Schmelzen von Metallen, insbesondere von Stahl, bestehend aus Kühlwasservorläufen und Kühlwasserrückläufen, mit einem mittels einer Kippbühne kippbaren Ofengefäß, das mit einem anheb- und verschwenkbaren Ofendeckel abdeckbar ist, wobei die Kühlwasserzu- und -abführung über abgedichtete Rohrdrehgelenke (26) mittels Kühlwasservorlaufrohrabschnitte (24) und Kühlwasserrücklaufrohrabschnitte (25) erfolgt, die an einem Ende der Rohrdrehgelenke (26) miteinander verbunden und an ihrem anderen Ende jeweils in Rohrdrehgelenken (26) in Festpunkten (31) drehbar sind, und die einer Kippbewegung der Kippbühne (13) und einer Schwenkbewegung des Ofendeckels (12), sowie dessen Hub (30) folgend zwischen den Festpunkten (31) scherenförmig relativ zueinander klappbar sind, **dadurch gekennzeichnet, dass** der Kühlwasservorlauf (18) und die Kühlwasserrückläufe (19, 19a) für den Ofendeckel (12) und die Kühlwasserrückläufe (20, 20a) für den Abgaskrümmer (15) in einem Drehportal (17) geführt sind.

2. Kühlwasserführung nach Anspruch 1, **dadurch gekennzeichnet, dass** das Drehportal (17) einen gemeinsamen, zentral angeordneten Kühlwasservorlauf (18) für den Ofendeckel (12) und für einen dem Ofendeckel (12) zugeordneten Abgaskrümmer (15) aufweist.

3. Kühlwasserführung nach den Ansprüchen 1 und 2, **dadurch gekennzeichnet, dass** der Kühlwasservorlauf (18) und die Kühlwasserrückläufe (20, 20a) des Ofendeckels (12) in dem Drehportal (17) im Wesentlichen vertikal verlaufen, wobei die Kühlwasserrückläufe (20, 20a) und (19, 19a) in einem gemeinsamen Sammler (33) zusammenlaufen und mit diesem über den dem Kühlwasservorlauf (18) zugeordneten Rohrdrehgelenk (26) und einem weiteren Rohrdrehgelenk (26a) drehbar ausgebildet sind.

4. Kühlwasserführung nach den Ansprüchen 1 bis 3, **dadurch gekennzeichnet, dass** das Drehportal (17) der Kippbühne (13) zugeordnet ist und der im Drehportal (17) angeordnete Kühlwasservorlauf (18) und die Kühlwasserrückläufe (19, 19a) für den Deckel (12) und die Kühlwasserrückläufe (20, 20a) für den Abgaskrümmer (15) über die Kippbühne (13) kippbar ausgebildet sind.

5. Kühlwasserführung nach einem oder mehreren der Ansprüche 1 bis 4, **dadurch gekennzeichet, dass** das Drehportal (17) um den Kühlwasservorlauf (18) drehbar ist.

6. Kühlwasserführung nach einem oder mehreren der Ansprüche 1 bis 5, **dadurch gekennzeichnet, dass** das Drehportal (17) drehbar gelagert und mit einem Drehportalantrieb (23) um den Kühlwasservorlauf (18) drehbar ist.

7. Kühlwasserführung nach einem oder mehreren der Ansprüche 1 bis 6, **dadurch gekennzeichnet, dass** die Vorlaufrohrabschnitte (24) des Ofendeckels (12) in Rohrdrehgelenken (26) in unterschiedlichen Schwenkwinkeln (28, 28', 28'', 28''') und die Rücklaufrohrabschnitte (25) in unterschiedlichen Schwenkwinkeln (29, 29', 29'', 29''') scherenförmig relativ zueinander klappbar sind.

8. Kühlwasserführung nach Anspruch 7, **dadurch gekennzeichnet, dass** die Scheitelpunkte (32) der scherenförmig relativ zueinander klappbaren Vorlaufrohrabschnitte (24) und Rücklaufrohrabschnitte (25) bei unterschiedlichen Schwenkwinkeln (28, 28', 28", 28''', 29, 29', 29'', 29''') höhenvariabel sind.

9. Kühlwasserführung nach Anspruch 1, **dadurch gekennzeichnet, dass** die Kühlwasservorläufe (21) und Kühlwasserrückläufe (22) für das Ofengefäß (11) Festpunkte (31) aufweisen, die in Rohrdrehgelenken (26) scherenförmig mit relativ zueinander klappbaren Vorlaufrohrabschnitten (24) und Rücklaufrohrabschnitten (25) verbunden sind, und die einer mittels der Kippbühne (13) erfolgten Kippbewegung des Ofengefäßes (11) folgen.

10. Kühlwasserführung nach Anspruch 9, **dadurch gekennzeichnet, dass** die Vorlaufrohrabschnitte (24) und die Rücklaufrohrabschnitte (25) des Ofengefäßes (11) in Rohrdrehgelenken (26) zwischen den Festpunkten (31) in unterschiedlichen Schwenkwinkeln (28, 28', 29, 29') zueinander klappbar sind.

11. Kühlwasserführung nach Anspruch 10, **dadurch gekennzeichnet, dass** die Scheitelpunkte (32) der scherenförmig relativ zueinander klappbaren Vorlaufrohrabschnitte (24) und Rücklaufrohrabschnitte (25) bei unterschiedlichen Schwenkwinkeln (28, 29; 28', 29') höhenvariabel sind.

## Claims

1. Cooling water conduit means for a smelting furnace for the smelting of metals, particularly steel, consisting of cooling water forward runs and cooling water return runs, with a furnace vessel, which is tippable by means of a tipping platform and which can be covered by a raisable and pivotable furnace cover, wherein the cooling water feed and discharge take place by way of sealed pipe universal joints (26) by means of cooling water forward run pipe sections (24) and cooling water return run pipe sections, which are connected together at one end of the pipe rotary joints (26) and are rotatable at the other end thereof in respective pipe rotary joints (26) at fixed points (31), and which are foldable relative to one another in scissors-like manner between the fixed points (31) to follow a tipping movement of the tipping platform (13) and a pivot movement of the furnace cover (12) as well as the stroke (30) thereof, **characterised in that** the cooling water forward run (18) and the cooling water return runs (19, 19a) for the furnace cover (12) and the cooling water return runs (20, 20a) for the waste gas elbow (15) are guided in a rotary portal (17).

2. Cooling water conduit means according to claim 1, **characterised in that** the rotary portal (17) has a common, centrally arranged cooling water forward run (18) for the furnace cover (12) and for a waste gas elbow (15) associated with the furnace cover (12).

3. Cooling water conduit means according to claims 1 and 2, **characterised in that** the cooling water forward run (18) and the cooling water return runs (20, 20a) of the furnace cover (12) extend substantially vertically in the rotary portal (17), wherein the cooling water return runs (20, 20a and 19, 19a) run together at a common collector (33) and are constructed to be rotatable therewith by way of the pipe universal joint (26), which is associated with the cooling water forward run (18), and a further pipe rotary joint (26a).

4. Cooling water conduit means according to claims 1 to 3, **characterised in that** the rotary portal (17) is associated with the tipping platform (13) and the cooling water forward run (18) arranged in the rotary portal (17) and the cooling water return runs (19, 19a) for the cover (12) and the cooling water return runs (20, 20a) for the waste gas elbow (15) are constructed to be tippable relative to the tipping platform.

5. Cooling water conduit means according to one or more of claims 1 to 4, **characterised in that** the rotary portal (17) is rotatable about the cooling water forward run (18).

6. Cooling water conduit means according to one or more of claims 1 to 5, **characterised in that** the rotary portal (17) is mounted to be rotatable and is rotatable about the cooling water forward run (18) by a rotary portal drive (23).

7. Cooling water conduit means according to one or more of claims 1 to 6, **characterised in that** the forward run pipe sections (24) of the furnace cover (12) are foldable relative to one another in scissors-like manner in pipe universal joints (26) at different pivot angles (28, 28', 28", 28"') and the return run pipe sections (25) are foldable relative to one another in scissors-like manner at different pivot angles (29, 29', 29", 29"').

8. Cooling water conduit means according to claim 7, **characterised in that** the crowns (32) of the forward run pipe sections (24) and return run pipe sections (25) pivotable relative to one another in scissors-like manner are variable in height at different pivot angles (28, 28', 28", 28"', 29, 29', 29", 29"').

9. Cooling water conduit means according to claim 1, **characterised in that** the cooling water forward runs (21) and cooling water return runs (22) have for the furnace vessel (11) fixed points (31) which are connected at pipe universal joints (26) in scissors-like manner with forward run pipe sections (24) and return run pipe sections (25) foldable relative to one another and which follow a tipping movement of the furnace vessel (11) effected by means of the tipping platform (13).

10. Cooling water conduit means according to claim 9, **characterised in that** the forward run pipe sections (24) and the return run pipe sections (25) of the furnace vessel (11) are foldable relative to one another at different pivot angles (28, 28', 29, 29') at pipe universal joints (26) between the fixed points (31).

11. Cooling water conduit means according to claim 10, **characterised in that** the crowns (32) of the forward run pipe sections (24) and return run pipe sections (25) foldable relative to one another in scissors-like manner are variable in height for different pivot angles (28, 29; 28', 29').

## Revendications

1. Guidage pour de l'eau de refroidissement, destiné à un four de fusion pour la mise en fusion de métaux, en particulier d'acier, constitué par des tronçons aller pour l'eau de refroidissement et des tronçons de retour pour l'eau de refroidissement, comprenant une cuve de four apte à basculer au moyen d'un déchargeur basculant, qui peut être recouverte avec un couvercle de four apte à se soulever et à pivoter, l'alimentation et l'évacuation de l'eau de refroidissement ayant lieu via des articulations tubulaires du type à charnières (26) rendues étanches, au moyen de sections tubulaires faisant office de tronçons aller pour l'eau de refroidissement (24) et de sections tubulaires faisant office de tronçons de retour pour l'eau de refroidissement (25), qui sont reliées les unes aux autres à une extrémité des articulations tubulaires du type à charnières (26) et qui sont à même d'effectuer des rotations à des endroits fixes (31) à leur autre extrémité respectivement dans des articulations tubulaires du type à charnières (26), et qui peuvent se refermer l'une par rapport à l'autre à la manière de ciseaux entre les points fixes (31) suite à un mouvement de basculement du déchargeur basculant (13) et à un mouvement de pivotement du couvercle du four (12) et également de sa course (30), **caractérisé en ce que** le tronçon aller pour l'eau de refroidissement (18) et les tronçons de retour pour l'eau de refroidissement (19, 19a) pour le couvercle du four (12) et les tronçons de retour pour l'eau de refroidissement (20, 20a) pour le collecteur des gaz d'échappement (15) sont guidés dans un portique rotatif (17).

2. Guidage pour de l'eau de refroidissement selon la revendication 1, **caractérisé en ce que** le portique rotatif (17) présente un tronçon aller pour l'eau de refroidissement (18) disposé en position centrale, commun pour le couvercle du four (12) et pour un collecteur des gaz d'échappement (15) attribué au couvercle du four (12).

3. Guidage pour de l'eau de refroidissement selon les revendications 1 et 2, **caractérisé en ce que** le tronçon aller pour l'eau de refroidissement (18) et les tronçons de retour pour l'eau de refroidissement (20, 20a) du couvercle du four (12) s'étendent essentiellement à la verticale dans le portique rotatif (17), les tronçons de retour pour l'eau de refroidissement (20, 20a) et (19, 19a) convergeant dans un collecteur commun (33) et étant réalisés pour être rotatifs avec ce dernier via l'articulation tubulaire du type à charnière (26) attribuée au tronçon aller pour l'eau de refroidissement (18) et via une articulation tubulaire supplémentaire du type à charnière (26a).

4. Guidage pour de l'eau de refroidissement selon les revendications 1 à 3, **caractérisé en ce que** le portique rotatif (17) est attribué au déchargeur basculant (13) et le tronçon aller pour l'eau de refroidissement (18) disposé dans le portique rotatif (18) et les tronçons de retour pour l'eau de refroidissement (19, 19a) pour le couvercle (12) et les tronçons de retour pour l'eau de refroidissement (20, 20a) pour le collecteur des gaz d'échappement (15) sont réalisés pour pouvoir basculer via le déchargeur basculant (13).

5. Guidage pour de l'eau de refroidissement selon une ou plusieurs des revendications 1 à 4, **caractérisé en ce que** le portique rotatif (17) est à même d'effectuer des rotations autour du tronçon aller pour l'eau de refroidissement (18)

6. Guidage pour de l'eau de refroidissement selon une ou plusieurs des revendications 1 à 5, **caractérisé en ce que** le portique rotatif (17) est monté en rotation et est à même d'effectuer des rotations autour du tronçon aller pour l'eau de refroidissement (18) avec un entraînement (23) du portique rotatif.

7. Guidage pour de l'eau de refroidissement selon une ou plusieurs des revendications 1 à 6, **caractérisé en ce que** les sections tubulaires du tronçon aller (24) du couvercle du four (12) peuvent se replier à la manière de ciseaux dans des articulations tubulaires du type à charnières (26) en formant des angles de pivotement différents (28, 28', 28", 28"') réciproquement avec les sections tubulaires du tronçon de retour (25) en formant des angles de pivotement différents (29, 29', 29", 29"').

8. Guidage pour de l'eau de refroidissement selon la revendication 7, **caractérisé en ce que** les sommets (32) des sections tubulaires du tronçon aller (24) et des sections tubulaires du tronçon de retour (25) qui peuvent se replier l'une vers l'autre à la manière de ciseaux en formant des angles de pivotement différents (28, 28', 28", 28"', 29, 29', 29", 29"') possèdent une hauteur variable.

9. Guidage pour de l'eau de refroidissement selon la revendication 1, **caractérisé en ce que** les tronçons aller pour l'eau de refroidissement (21) et les tronçons de retour pour l'eau de refroidissement (22) pour la cuve du four (11) présentent des points fixes (31) qui sont reliés à la manière de ciseaux dans des articulations tubulaires du type à charnières (26) avec des sections tubulaires du tronçon aller (24) et des sections tubulaires du tronçon de retour (25) qui peuvent se replier l'une vers l'autre, et qui font suite à un mouvement de basculement de la cuve de four (11) mis en oeuvre au moyen du déchargeur basculant (13).

10. Guidage pour de l'eau de refroidissement selon la revendication 9, **caractérisé en ce que** les sections tubulaires du tronçon aller (24) et les sections tubulaires du tronçon de retour (25) de la cuve de four (11) peuvent se replier l'une vers l'autre dans des articulations tubulaires du type à charnières (26) entre les points fixes (31) en formant des angles de pivotement différents (28, 28' ; 29, 29').

11. Guidage pour de l'eau de refroidissement selon la revendication 10, **caractérisé en ce que** les sommets (32) des sections tubulaires du tronçon aller (24) et des sections tubulaires du tronçon de retour (25) qui peuvent se replier l'une vers l'autre à la manière de ciseaux en formant des angles de pivotement différents (28, 29 ; 28', 29') possèdent une hauteur variable.
